(19) **Europäisches Patentamt / European Patent Office / Office européen des brevets**

(11) **EP 4 109 992 A1**

(12) # EUROPEAN PATENT APPLICATION
published in accordance with Art. 153(4) EPC

(43) Date of publication:
**28.12.2022 Bulletin 2022/52**

(21) Application number: **21757753.5**

(22) Date of filing: **17.02.2021**

(51) International Patent Classification (IPC):
**H04W 72/04** (2009.01)   **H04W 28/04** (2009.01)
**H04W 84/12** (2009.01)

(52) Cooperative Patent Classification (CPC):
**H04W 28/04; H04W 72/04; H04W 84/12**

(86) International application number:
**PCT/JP2021/005878**

(87) International publication number:
**WO 2021/166944 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.02.2020   JP 2020025104**

(71) Applicant: **Sharp Kabushiki Kaisha
Sakai-shi
Osaka 590-8522 (JP)**

(72) Inventors:
• **TOMEBA Hiromichi
  Sakai City, Osaka 590-8522 (JP)**
• **NAMBA Hideo
  Sakai City, Osaka 590-8522 (JP)**

(74) Representative: **Müller-Boré & Partner
Patentanwälte PartG mbB
Friedenheimer Brücke 21
80639 München (DE)**

(54) **STATION DEVICE AND COMMUNICATION METHOD**

(57)    A station apparatus according to the present invention is a station apparatus configured to interpret a physical layer signal, the station apparatus including a signal demodulator configured to decode a physical layer signal and perform error detection, based on either first decoding that performs packet combining in the physical layer or second decoding that does not perform packet combining in the physical layer, a higher layer processor configured to transfer a result of the error detection to a MAC layer, and a transmitter configured to hold at least part of the physical layer signal and transmit a trigger frame that causes another station apparatus to transmit a frame, wherein the trigger frame includes information indicating either the first decoding or the second decoding.

FIG. 9

**Description**

Technical Field

The present invention relates to a station apparatus and a communication method.
This application claims priority to JP 2020-25104 filed on February 18, 2020, the contents of which are incorporated herein by reference.

Background Art

The Institute of Electrical and Electronics Engineers Inc. (IEEE) has been advancing drafting of specifications of IEEE 802.11ax, which is a wireless Local Area Network (LAN) standard for attaining even higher speeds of IEEE 802.11, and wireless LAN devices complying with a specification draft have been appearing on the market. Activities for standardizing IEEE 802.11be as a standard subsequent to IEEE 802.11ax have been started in recent days. With the rapid distribution of wireless LAN devices, further improvement in throughput per user in environments where wireless LAN devices are densely disposed has been studied in the standardization of IEEE 802.11be.
In IEEE 802.11 standards, specifications of an Automatic repeat request (ARQ) have been drafted for retransmitting an error packet in a case that a packet error has occurred on the recipient. In known IEEE 802.11 standards, packet retransmission is managed in a Medium Access Control (MAC) layer. In other words, even in a case that an error has occurred due to a Physical (PHY) layer, whether retransmission is performed is determined in the MAC layer.
Incidentally, in packet communication, a hybrid ARQ (HARQ) in which an error correction code and the ARQ are combined, is effective for improving transmission quality. For the HARQ, study has been widely performed on chase combining, in which same packets are transmitted at the time of retransmission and the packets are combined on the recipient, to improve a Signal to Noise power ratio (SNR) of a reception signal and Incremental redundancy (IR) combining, in which a redundancy signal (parity signal) is newly transmitted at the time of retransmission to enhance error correction decoding capability on the recipient.
In wireless LAN devices where a plurality of terminal apparatuses communicate based on Carrier sense multiplex access/collision avoidance (CSMA/CA), a primary cause of a packet error is that random back-off values used in the CSMA/CA matches between the terminal apparatuses, and hence packet transmissions are simultaneously performed, thereby causing a packet collision. In other words, an extreme decrease in a Signal to Interference power ratio (SIR) of a reception signal is the cause.
In recent IEEE 802.11 standards, the specifications of a Spatial reuse operation (SRP) that mitigates a carrier sense level under a given condition have been drafted. This is because it has been found that, in recent situations where wireless LAN devices are densely arranged, allowing interference to a certain degree has more advantage in terms of acquiring a transmission right.
This means that the cause of a packet error in the wireless LAN devices has been changed to the SNR or a Signal to Interference plus Noise power ratio (SINR) rather than the SIR. In other words, this indicates realization of an environment where transmission quality improvement by HARQ can be expected even in the wireless LAN devices.

Citation List

Non Patent Literature

NPL 1: IEEE 802.11-19/1578-01-0be, Nov. 2019.

Summary of Invention

Technical Problem

In the known IEEE 802.11 standards, error correction codes are applied in a PHY layer. This means that packet combining needs to be performed in the PHY layer in order to obtain gains in the HARQ in a wireless LAN device. Meanwhile, in the known IEEE 802.11 standards, packet retransmission is managed in a MAC layer. In general, control information is not exchanged between layers, which means that with a mechanism in the known IEEE 802.11 standards, the HARQ cannot be effectively applied to wireless LAN devices.
An aspect of the present invention has been made in view of the problems described above, and an object of the present invention is to disclose a station apparatus and a communication method capable of efficiently performing packet combining in the PHY layer while maintaining a retransmission function tail of the MAC layer.

## EP 4 109 992 A1

Solution to Problem

A station apparatus and a communication method according to an aspect of the present invention for solving the aforementioned problems are as follows.

(1) Specifically, a station apparatus according to an aspect of the present invention is a station apparatus configured to interpret a physical layer signal, the station apparatus including a signal demodulator configured to decode a signal for a physical layer and perform error detection, based on either first decoding that performs packet combining in the physical layer or second decoding that does not perform packet combining in the physical layer, a higher layer processor configured to transfer a result of the error detection to a MAC layer, and a transmitter configured to hold at least part of the physical layer signal and transmit a trigger frame that causes another station apparatus to transmit a frame, wherein the trigger frame includes information indicating either the first decoding or the second decoding.
(2) The station apparatus according to an aspect of the present invention is the station apparatus described in (1) above, wherein the trigger frame includes information indicating a resource unit allocated to the other station apparatus, and in a case that the information indicating the resource unit indicates a bandwidth smaller than a prescribed value, the trigger frame includes the information indicating the second decoding.
(3) The station apparatus according to an aspect of the present invention is the station apparatus described in (1) above, wherein in a case that a maximum number of frame aggregations performed by the other station apparatus is larger than a prescribed value, the trigger frame includes the information indicating the second decoding.
(4) The station apparatus according to an aspect of the present invention is the station apparatus described in (1) above, wherein a maximum number of frame aggregations performed by the other station apparatus is described in the trigger frame, and in a case that the maximum number of frame aggregations is larger than a prescribed value, the trigger frame includes the information indicating the second decoding.
(5) The station apparatus according to an aspect of the present invention is the station apparatus described in (1) above, wherein in a case that a period during which the trigger frame reserves a radio medium is shorter than a prescribed period, the trigger frame includes the information indicating the second decoding.
(6) A communication method according to an aspect of the present invention is a communication method for a station apparatus configured to interpret a physical layer signal, the communication method comprising the steps of decoding a physical layer signal and performing error detection, based on either first decoding that performs packet combining in the physical layer or second decoding that does not perform the packet combining in the physical layer, transferring a result of the error detection to a MAC layer, holding at least part of the physical layer signal, and transmitting a trigger frame that causes another station apparatus to transmit a frame, wherein the trigger frame includes information indicating either the first decoding or the second decoding.

Advantageous Effects of Invention

According to an aspect of the present invention, it is possible to efficiently perform packet combining in the PHY layer while maintaining a retransmission function tail of the MAC layer, and thus, it is possible to contribute to improving user throughput of a wireless LAN device.

Brief Description of Drawings

FIG. 1 is a diagram illustrating an example of a frame structure according to an aspect of the present invention.
FIG. 2 is a diagram illustrating an example of a frame structure according to an aspect of the present invention.
FIG. 3 is a diagram illustrating an example of communication according to an aspect of the present invention.
FIG. 4 is an overview diagram illustrating examples of splitting a radio medium according to an aspect of the present invention.
FIG. 5 is a diagram illustrating a configuration example of a communication system according to an aspect of the present invention.
FIG. 6 is a block diagram illustrating a configuration example of a radio communication apparatus according to an aspect of the present invention.
FIG. 7 is a block diagram illustrating a configuration example of a radio communication apparatus according to an aspect of the present invention.
FIG. 8 is an overview diagram illustrating an example of a coding scheme according to an aspect of the present invention.
FIG. 9 is an overview diagram illustrating an example of a coding scheme according to an aspect of the present invention.

Description of Embodiments

A communication system according to the present embodiment includes a radio transmitting apparatus (access point apparatus, base station apparatus: Access point, base station apparatus) and a plurality of radio receiving apparatuses (station apparatuses, terminal apparatuses: stations, terminal apparatuses). A network including the base station apparatus and the terminal apparatuses is referred to as a basic service set (BSS: management range). In addition, the station apparatus according to the present embodiment can include a function of the access point apparatus. Similarly, the access point apparatus according to the present embodiment can include a function of the station apparatus.

The base station apparatus and the terminal apparatuses in the BSS are assumed to perform communication based on Carrier sense multiple access with collision avoidance (CSMA/CA). Although an infrastructure mode in which the base station apparatus performs communication with the plurality of terminal apparatuses is targeted in the present embodiment, the method of the present embodiment can also be performed in an ad hoc mode in which the terminal apparatuses perform communication directly with each other. In the ad hoc mode, the terminal apparatus forms the BSS instead of the base station apparatus. The BSS in the ad hoc mode will also be referred to as an Independent Basic Service Set (IBSS). In the following description, a terminal apparatus that forms the IBSS in the ad hoc mode can also be regarded as the base station apparatus.

In an IEEE 802.11 system, each apparatus can transmit transmission frames of a plurality of frame types with a common frame format. Each transmission frame is defined by a Physical (PHY) layer, a Medium access control (MAC) layer, and a Logical Link Control (LLC) layer.

A transmission frame of the PHY layer will be referred to as a physical (PHY) protocol data unit (PPDU or physical layer frame). The PPDU includes a physical layer header (PHY header) including header information and the like for performing signal processing in the physical layer, a physical (PHY) service data unit (PSDU or MAC layer frame) that is a data unit processed in the physical layer, and the like. The PSDU can include an Aggregated MPDU (A-MPDU) in which a plurality of MAC protocol data units (MPDUs) as a retransmission unit in a radio section are aggregated.

The PHY header includes reference signals such as a Short training field (STF) used for detection, synchronization, and the like of signals, and a Long training field (LTF) used for obtaining channel information for demodulating data, and a control signal such as a Signal (SIG) including control information for demodulating data. Also, the STF is classified into a Legacy-STF (L-STF), a High throughput-STF (HT-STF), a Very high throughput-STF (VHT-STF), a High efficiency-STF (HE-STF), an Extremely High Throughput-STF (EHT-STF), and the like in accordance with compliant standards, and the LTF and the SIG are also similarly classified into an L-LTF, an HT-LTF, a VHT-LTF, an HE-LTF, an L-SIG, an HT-SIG, a VHT-SIG, an HE-SIG, and an EHT-SIG. The VHT-SIG is further classified into VHT-SIG-A1, VHT-SIG-A2, and VHT-SIG-B. Similarly, the HE-SIG is classified into HE-SIG-A1 to 4 and HE-SIG-B. On the assumption of updating of technologies in the same standard, a Universal SIGNAL (U-SIG) field including additional control information can be included.

Furthermore, the PHY header can include information for identifying a transmission source BSS of the transmission frame (hereinafter, also referred to as BSS identification information). The information for identifying the BSS can be, for example, a Service Set Identifier (SSID) of the BSS or a MAC address of a base station apparatus of the BSS. The information for identifying the BSS can be a value unique to the BSS (such as a BSS Color, for example) other than the SSID and the MAC address.

The PPDU is modulated in accordance with the compliant standard. In IEEE 802.11n standards, for example, the PPDU is modulated into an Orthogonal frequency division multiplexing (OFDM) signal.

The MPDU includes a MAC layer header (MAC header) including header information and the like for performing signal processing in the MAC layer, a MAC service data unit (MSDU) that is a data unit processed in the MAC layer or a frame body, and a Frame check sequence (FCS) for checking whether there is an error in the frame. Also, a plurality of MSDUs can be aggregated as an Aggregated MSDU (A-MSDU).

The frame types of transmission frames of the MAC layer are roughly classified into three frame types, namely a management frame for managing an association state and the like between apparatuses, a control frame for managing a communication state between apparatuses, and a data frame including actual transmission data, and each frame type is further classified into a plurality of kinds of subframe types. The control frame includes an Acknowledge (Ack) frame, a Request to send (RTS) frame, a Clear to send (CTS) frame, and the like. The management frame includes a Beacon frame, a Probe request frame, a Probe response frame, an Authentication frame, an Association request frame, an Association response frame, and the like. The data frame includes a Data frame, a polling (CF-poll) frame, and the like. Each apparatus can recognize a frame type and a subframe type of a received frame by reading detail of the frame control field included in a MAC header.

Note that Ack may include Block Ack. Block Ack can perform a reception completion notification to a plurality of MPDUs.

The beacon frame includes a Field in which an interval at which a beacon is transmitted (Beacon interval) and an SSID are stated. The base station apparatus can periodically notify the BSS of the beacon frame, and each terminal apparatus can recognize the base station apparatus in the surroundings of the terminal apparatus by receiving the beacon frame. The action of the terminal apparatus recognizing the base station apparatus based on the beacon frame broadcast from the base station apparatus will be referred to as Passive scanning. On the other hand, an action of the terminal apparatus searching for the base station apparatus by broadcasting a probe request frame in the BSS will be referred to as Active scanning. The base station apparatus can transmit a probe response frame as a response to the probe request frame, and detail described in the probe response frame is equivalent to that in the beacon frame.

The terminal apparatus recognizes the base station apparatus and performs processing to establish association with the base station apparatus. The association processing is classified into an Authentication procedure and an Association procedure. The terminal apparatus transmits an authentication frame (authentication request) to the base station apparatus with which association is desired. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the terminal apparatus has been authenticated by the base station apparatus by reading the status code described in the authentication frame. Note that the base station apparatus and the terminal apparatus can exchange the authentication frame a plurality of times.

After the authentication procedure, the terminal apparatus transmits an association request frame to the base station apparatus in order to perform the association procedure. Once the base station apparatus receives the association request frame, the base station apparatus determines whether to allow the association of the terminal apparatus and transmits an association response frame to provide a notification regarding the determination. In the association response frame, an Association identifier (AID) for identifying the terminal apparatus is described in addition to a status code indicating whether to perform the association processing. The base station apparatus can manage a plurality of terminal apparatuses by configuring different AIDs for the terminal apparatuses for which the base station apparatus has allowed association.

After the association processing is performed, the base station apparatus and the terminal apparatus perform actual data transmission. In the IEEE 802.11 system, a Distributed Coordination Function (DCF), a Point Coordination Function (PCF), and a function in which the DCF and the PCF are enhanced (an Enhanced distributed channel access (EDCA), a Hybrid coordination function (HCF), and the like) are defined. A case that the base station apparatus transmits signals to the terminal apparatus using the DCF will be described below as an example.

In the DCF, the base station apparatus and the terminal apparatus perform Carrier sense (CS) for checking a utilization condition of a radio channel in the surroundings of the apparatuses themselves prior to communication. For example, in a case that the base station apparatus that is a transmitting station receives a signal in a level that is higher than a predefined Clear channel assessment level (CCA level) in the radio channel, transmission of the transmission frame through the radio channel is postponed. Hereinafter, a state in which a signal in a level that is equal to or higher than the CCA level is detected in the radio channel will be referred to as a Busy state, and a state in which a signal in a level that is equal to or higher than the CCA level is not detected will be referred to as an Idle state. In this manner, CS performed based on a power (reception power level) of a signal actually received by each apparatus will be referred to as physical carrier sense (physical CS). Note that the CCA level will also be referred to as a carrier sense level (CS level) or a CCA threshold (CCAT). Note that in a case that a signal in a level that is equal to or higher than the CCA level is detected, the base station apparatus and the terminal apparatus start to perform an operation of demodulating at least a signal of the PHY layer.

The base station apparatus performs carrier sense corresponding to an Inter frame space (IFS) in accordance with the type of the transmission frame to be transmitted and determines which of the busy state and the idle state the radio channel is in. The period during which the base station apparatus performs carrier sense differs depending on the frame type and the subframe type of transmission frame to be transmitted by the base station apparatus from now on. In the IEEE 802.11 system, a plurality of IFSs with different periods are defined, and there are a short frame interval (Short IFS: SIFS) used for a transmission frame to which the highest priority is given, a polling frame interval (PCF IFS: PIFS) used for a transmission frame with relatively high priority, a distributed control frame interval (DCF IFS: DIFS) used for a transmission frame with the lowest priority, and the like. In a case that the base station apparatus transmits a data frame with the DCF, the base station apparatus uses the DIFS.

The base station apparatus waits for DIFS and then further waits for a random backoff time to prevent frame collision. In the IEEE 802.11 system, a random backoff time called a Contention window (CW) is used. CSMA/CA is based on the assumption that a transmission frame transmitted by a certain transmitting station is received by a receiving station in a state with no interference from other transmitting stations. Therefore, in a case that transmitting stations transmit transmission frames at the same timing, the frames collide against each other, and the receiving station cannot receive them properly. Thus, each transmitting station waits for a randomly configured time before starting the transmission, such that the collision of the frames is avoided. In a case that the base station apparatus determines, through carrier sense, that a radio channel is in an idle state, the base station apparatus starts to count down CW and acquires a transmission right for the first time after CW becomes zero and can transmit the transmission frame to the terminal apparatus. Note that in a case that the base station apparatus determines through the carrier sense that the radio channel is in the busy state during the counting-down of CW, the base station apparatus stops the counting-down of CW. In a case that the radio channel is brought into the idle state, then the base station apparatus restarts the counting-down of the remaining CW after the previous IFS.

A terminal apparatus that is a receiving station receives a transmission frame, reads a PHY header of the transmission frame, and demodulates the received transmission frame. Then, the terminal apparatus can recognize whether the transmission frame is directed to the terminal apparatus by reading a MAC header of the demodulated signal. Note that the terminal apparatus can also determine the destination of the transmission frame based on information described in the PHY header (for example, a Group identifier (Group ID: GID) listed in the VHT-SIG-A).

In a case that the terminal apparatus determines that the received transmission frame has been directed to the terminal apparatus and has been able to demodulate the transmission frame without any error, the terminal apparatus has to transmit an ACK frame indicating that the frame has been properly received to the base station apparatus that is the transmitting station. The ACK frame is one of transmission frames with the highest priority transmitted only after the waiting for the SIFS period (with no random backoff time). The base station apparatus ends the series of communication in response to reception of the ACK frame transmitted from the terminal apparatus. Note that in a case that the terminal apparatus has not been able to receive the frame properly, the terminal apparatus does not transmit ACK. Thus, the base station apparatus ends the communication on the assumption that the communication has been failed in a case that the ACK frame has not been received from the receiving station for a certain period (SIFS + ACK frame length) after the transmission of the frame. In this manner, end of single communication (also called a burst) of the IEEE 802.11 system is always determined based on whether the ACK frame has been received except for special cases such as a case of transmission of a broadcast signal such as a beacon frame and a case that fragmentation for splitting transmission data is used.

In a case that the terminal apparatus determines that the received transmission frame has not been directed to the terminal apparatus, the terminal apparatus configures a Network allocation vector (NAV) based on the Length of the transmission frame described in the PHY header or the like. The terminal apparatus does not attempt communication during a period configured in the NAV. In other words, because the terminal apparatus performs the same operation as in a case that the physical CS determines that the radio channel is in the busy state for a period configured in the NAV, the communication control based on the NAV is also called virtual carrier sense (virtual CS). The NAV is also configured by a Request to send (RTS) frame and a Clear to send (CTS) frame, which are introduced to solve a hidden terminal problem in addition to the case that the NAV is configured based on the information described in the PHY header.

Compared to the DCF in which each apparatus performs carrier sense and autonomously acquires a transmission right, the PCF controls a transmission right of each apparatus inside the BSS using a control station called a Point coordinator (PC). In general, the base station apparatus serves as a PC and acquires a transmission right of the terminal apparatus inside the BSS.

A communication period using the PCF includes a Contention free period (CFP) and a Contention period (CP). During the CP, communication is performed based on the aforementioned DCF, and the PC controls the transmission right during the CFP. The base station apparatus that is a PC broadcasts a beacon frame with description of a CFP period (CFP Max duration) and the like in the BSS prior to a communication with the PCF. Note that the PIFS is used to transmit the beacon frame broadcast at the time of a start of transmission with the PCF, and the beacon frame is transmitted without waiting for CW. The terminal apparatus that has received the beacon frame configures the period of CFP described in the beacon frame to the NAV. Hereinafter, the terminal apparatus can acquire the transmission right only in a case that a signal (a data frame including CF-poll, for example) that performs signaling an acquisition of a transmission right transmitted by the PC is received, until the NAV elapses or a signal (a data frame including CF-end, for example) that broadcasts the end of the CFP in the BSS is received. Note that because no packet collision occurs inside the same BSS during the CFP period, each terminal apparatus does not take a random backoff time used in the DCF.

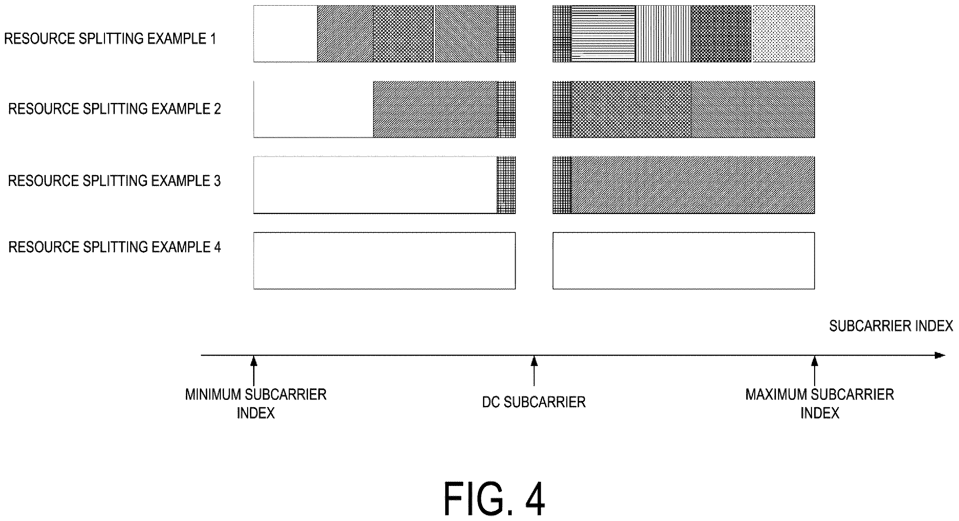

The radio medium can be split into a plurality of Resource units (RUs). FIG. 4 is an overview diagram illustrating an example of a split state of a radio medium. In the resource splitting example 1, for example, the radio communication apparatus can split a frequency resource (subcarrier) that is a radio medium into nine RUs. Similarly, in the resource splitting example 2, the radio communication apparatus can split a subcarrier that is a radio medium into five RUs. It is a matter of course that the resource splitting example illustrated in FIG. 4 is just an example, and for example, each of the plurality of RUs can include a different number of subcarriers. Moreover, the radio medium split into RUs can include not only a frequency resource but also a spatial resource. The radio communication apparatus (AP, for example) can transmit frames to a plurality of terminal apparatuses (a plurality of STAs, for example) at the same time by disposing the different frames directed to the terminal apparatuses in the RUs. The AP can describe information indicating the split state of the radio medium (Resource allocation information) as common control information in the PHY header of the frame transmitted by the AP. Moreover, the AP can describe information indicating an RU where a frame directed to an STA is disposed (resource unit assignment information) as unique control information in the PHY header of the frame transmitted by the AP.

Also, a plurality of terminal apparatuses (a plurality of STAs, for example) can transmit frames at the same time by transmitting the frames disposed in the RUs allocated to the plurality of respective terminal apparatuses. The plurality of STAs can perform frame transmission after waiting for a predetermined period after receiving the frame (Trigger frame: TF) including trigger information transmitted from the AP. Each STA can recognize the RU allocated to the AP, based on the information described in the TF. Also, each STA can acquire the RU through a random access with reference to the TF.

The AP can allocate a plurality of RUs to one STA at the same time. The plurality of RUs can include continuous subcarriers or can include non-continuous subcarriers. The AP can transmit one frame by using a plurality of RUs allocated to one STA or can transmit a plurality of frames with the frames allocated to different RUs. At least one of the plurality of frames can be a frame including common control information for a plurality of terminal apparatuses that transmit Resource allocation information.

One STA can be allocated with a plurality of RUs by the AP. The STA can transmit one frame by using the plurality of allocated RUs. Also, the STA can use the plurality of allocated RUs to perform transmission with a plurality of frames allocated to respective different RUs. The plurality of frames can include frames of mutually different frame types.

The AP can assign a plurality of Associate IDs (AIDs) to one STA. The AP can allocate the RUs to the plurality of respective AIDs assigned to the one STA. The AP can transmit mutually different frames using the RUs allocated to the plurality of respective AIDs assigned to the one STA. The different frames can include frames of mutually different frame types.

One STA can be assigned with a plurality of Associate IDs (AIDs) by the AP. One STA can be allocated with an RU to each of the plurality of assigned AIDs. One STA can recognize all of the RUs allocated to the plurality of respective AIDs assigned to the STA itself as RUs allocated to the STA and can transmit one frame by using the plurality of allocated RUs. Also, one STA can transmit a plurality of frames using the plurality of allocated RUs. At this time, the plurality of frames can be transmitted with information indicating AID associated with each of the allocated RUs described therein. The AP can transmit mutually different frames using the RUs allocated to the plurality of respective AIDs assigned to the one STA. The different frames can include frames of different frame types.

Hereinafter, the base station apparatus and the terminal apparatuses will also be collectively referred to as radio communication apparatuses. Also, information exchanged in a case that a certain radio communication apparatus performs communication with another radio communication apparatus will also be referred to as data. In other words, the radio communication apparatus includes the base station apparatus and the terminal apparatuses.

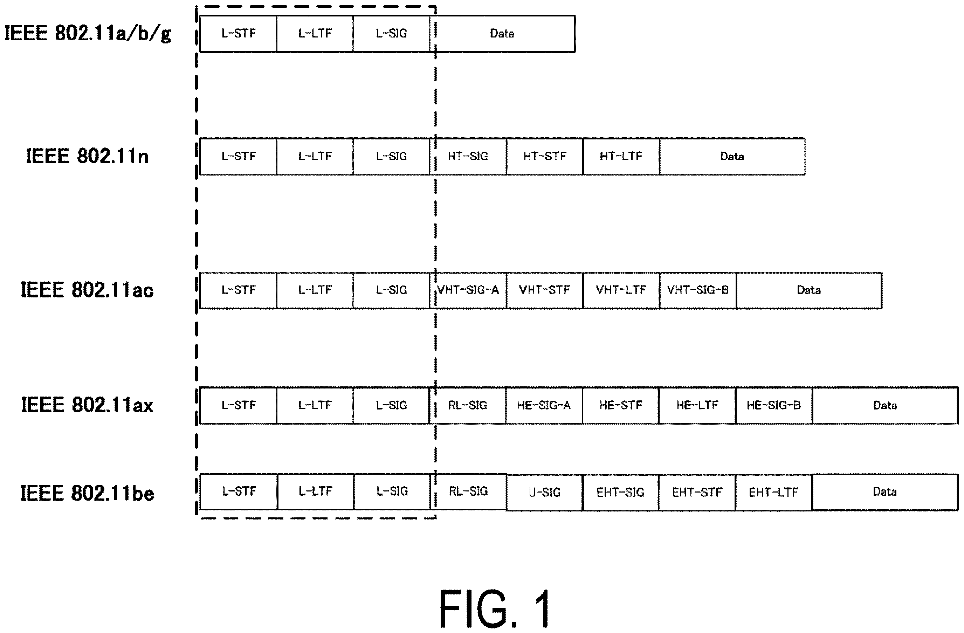

The radio communication apparatus includes any one of or both a function of transmitting a PPDU and a function of receiving a PPDU. FIG. 1 is a diagram illustrating an example of a PPDU configuration transmitted by the radio communication apparatus. The PPDU that is compliant with the IEEE 802.11a/b/g standard includes L-STF, L-LTF, L-SIG, and a Data frame (a MAC Frame, a MAC frame, a payload, a data part, data, information bits, and the like). The PPDU that is compliant with the IEEE 802.11n standard includes L-STF, L-LTF, L-SIG, HT-SIG, HT-STF, HT-LTF, and a Data frame. The PPDU that is compliant with the IEEE 802.11ac standard includes some or all of L-STF, L-LTF, L-SIG, VHT-SIG-A, VHT-STF, VHT-LTF, VHT-SIG-B, and a MAC frame. The PPDU studied in the IEEE 802.11ax standard includes some or all of L-STF, L-LTF, L-SIG, RL-SIG in which L-SIG is temporally repeated, HE-SIG-A, HE-STF, HE-LTF, HE-SIG-B, and a Data frame.

L-STF, L-LTF, and L-SIG surrounded by dotted lines in FIG. 1 are configurations commonly used in the IEEE 802.11 standard (hereinafter, L-STF, L-LTF, and L-SIG will also be collectively referred to as an L-header). For example, a radio communication apparatus that is compliant with the IEEE 802.11a/b/g standard can appropriately receive an L-header inside a PPDU that is compliant with the IEEE 802.11n/ac standard. The radio communication apparatus that is compliant with the IEEE 802.11a/b/g standard can receive the PPDU that is compliant with the IEEE 802.11n/ac standard while regarding it as a PPDU that is compliant with the IEEE 802.11a/b/g standard.

However, because the radio communication apparatus that is compliant with the IEEE 802.11a/b/g standard cannot demodulate the PPDU that is compliant with the IEEE 802.11n/ac standard following the L-header, it is not possible to demodulate information related to a Transmitter Address (TA), a Receiver Address (RA), and a Duration/ID field used for configuring the NAV.

As a method for the radio communication apparatus that is compliant with the IEEE 802.11a/b/g standard to appropriately configure the NAV (or perform a receiving operation for a predetermined period), IEEE 802.11 defines a method of inserting Duration information into the L-SIG. Information related to a transmission speed in the L-SIG (a RATE field, an L-RATE field, an L-RATE, an L_DATARATE, and an L_DATARATE field), information related to a transmission period (a LENGTH field, an L-LENGTH field, and an L-LENGTH) are used by the radio communication apparatus that is compliant with the IEEE 802.11a/b/g standard to appropriately configure the NAV.

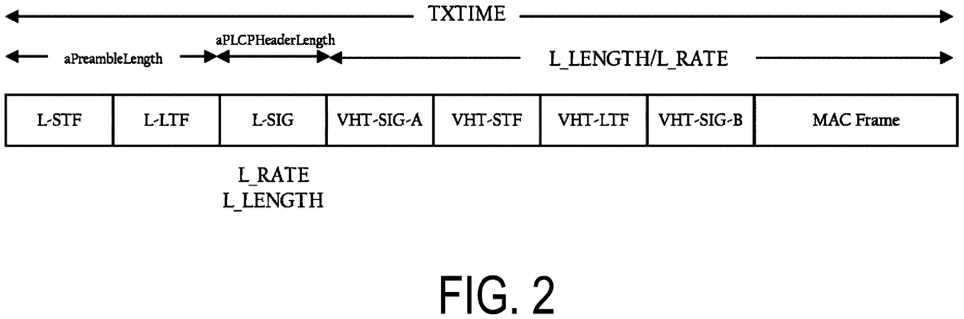

FIG. 2 is a diagram illustrating an example of a method of Duration information inserted into the L-SIG. Although a PPDU configuration that is compliant with the IEEE 802.11ac standard is illustrated as an example in FIG. 2, the PPDU configuration is not limited thereto. A PPDU configuration that is compliant with the IEEE 802.11n standard and a PPDU configuration that is compliant with the IEEE 802.11ax standard may be employed. TXTIME includes information related to the length of the PPDU, aPreambleLength includes information related to the length of a preamble (L-STF + L-LTF), and aPLCPHeaderLength includes information related to the length of a PLCP header (L-SIG). Equation (1) below is a mathematical formula illustrating an example of a method for calculating L_LENGTH.

[Math. 1]

$$L\_LENGTH = \lceil \frac{((TXTIME - SignalExtension) - (aPreambleLength + aPLCPHeaderLength))}{aSymbolLength} \rceil \times N_{ops} \\ - \lceil \frac{aPLCPServiceLength + aPLCPConvolutionalTailLength}{8} \rceil \quad \cdots (1)$$

Here, Signal Extension indicates a virtual period configured, for example, to maintain compatibility of the IEEE 802.11 standards, and $N_{ops}$ indicates information related to L_RATE. aSymbolLength indicates information related to a period of one symbol (OFDM symbol, or the like), aPLCPServiceLength indicates the number of bits included in a PLCP Service field, and aPLCPConvolutionalTailLength indicates the number of tail bits of a convolution code. The radio communication apparatus can calculate L_LENGTH by using Equation (1) and insert the calculated L_LENGTH into L-SIG, for example. Note that a method of calculating L_LENGTH is not limited to Equation (1). For example, L_LENGTH can also be calculated by Equation (2) below.

[Math. 2]

$$L\_LENGTH = \lceil \frac{((TXTIME - SignalExtension) - 20)}{4} \rceil \times 3 - 3 \quad \cdots (2)$$

The radio communication apparatus, in a case of transmitting the PPDU in L-SIG TXOP Protection, calculates L_LENGTH by Equation (3) or Equation (4) below.

[Math. 3]

$$L\_LENGTH = \lceil \frac{((L - SIGDuration - SignalExtension) - (aPreambleLength + aPLCPHeaderLength))}{aSymbolLength} \rceil \times N_{ops} \\ - \lceil \frac{aPLCPServiceLength + aPLCPConvolutionalTailLength}{8} \rceil \quad \cdots (3)$$

[Math. 4]

$$L\_LENGTH = \lceil \frac{((L - SIGDuration - SignalExtension) - 20)}{4} \rceil \times 3 - 3 \quad \cdots (4)$$

Here, L-SIG Duration indicates, for example, information related to a PPDU including L_LENGTH calculated by Equation (3) or Equation (4), and information related to a period that is the sum of periods of Ack and SIFS expected to be transmitted by a destination radio communication apparatus in response to the PPDU. The radio communication apparatus calculates L-SIG Duration by Equation (5) or Equation (6) below.

[Math. 5]

$$L - SIGDuration = (T_{init\_PPDU} - (aPreambleLength + aPLCPHeaderLength)) \\ + SIFS + T_{Res\_PPDU} \quad \cdots (5)$$

[Math. 6]

$$L - SIGDuration = (T_{MACDur} - SIFS - (aPreambleLength + aPLCPHeaderLength)) \quad \cdots (6)$$

Here, $T_{init\_PPDU}$ indicates information related to a period of a PPDU including L_LENGTH calculated by Equation (5), $T_{Res\_PPDU}$ indicates information related to a PPDU period of a response expected for the PPDU including L_LENGTH calculated by Equation (5). $T_{MACDur}$ indicates information related to a value of Duration/ID field included in the MAC frame in the PPDU including L_LENGTH calculated by Equation (6). In a case that the radio communication apparatus is an Initiator (developer, sender, leader, Transmitter), the radio communication apparatus calculates L_LENGTH by using Equation (5), or in a case that the radio communication apparatus is a Responder (recipient, Receiver), the radio communication apparatus calculates L_LENGTH by using Equation (6).

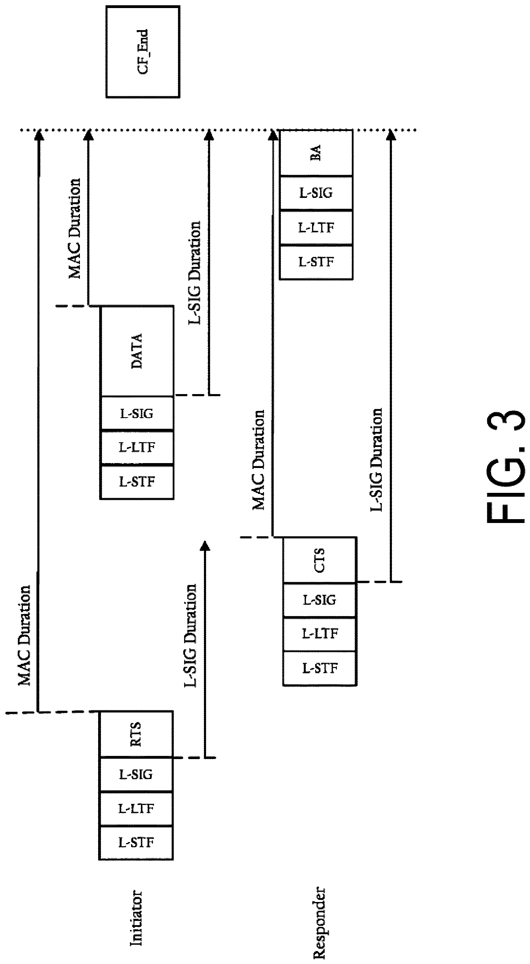

FIG. 3 is a diagram illustrating an example of L-SIG Duration in L-SIG TXOP Protection. DATA (a frame, a payload, data, and the like) include a part of or both the MAC frame and the PLCP header. Also, BA includes Block Ack or Ack. The PPDU includes L-STF, L-LTF, and L-SIG and can further include any one or more of DATA, BA, RTS, and CTS. Although L-SIG TXOP Protection using RTS/CTS is illustrated in the example illustrated in FIG. 3, CTS-to-Self may be used. Here, MAC Duration is a period indicated by a value of Duration/ID field. Also, Initiator can transmit a CF_End frame for providing a notification regarding an end of the L-SIG TXOP Protection period.

Next, a method of identifying a BSS from a frame received by a radio communication apparatus will be described. In order for the radio communication apparatus to identify the BSS from the received frame, the radio communication apparatus that transmits a PPDU preferably inserts information (BSS color, BSS identification information, a value unique to the BSS) for identifying the BSS into the PPDU. Information indicating the BSS color can be described in HE-SIG-A.

The radio communication apparatus can transmit L-SIG a plurality of times (L-SIG Repetition). For example, demodulation accuracy of L-SIG is improved by the radio communication apparatus on the recipient receiving L-SIG transmitted a plurality of times, by using Maximum Ratio Combining (MRC). Moreover, in a case that reception of L-SIG has properly been completed using the MRC, the radio communication apparatus can interpret the PPDU including the L-SIG as a PPDU that is compliant with the IEEE 802.11ax standard.

Even during the operation of receiving the PPDU, the radio communication apparatus can perform an operation of receiving a part of a PPDU other than the PPDU (such as a preamble, L-STF, L-LTF, and a PLCP header defined by IEEE 802.11, for example) (also referred to as a double-reception operation). In a case that a part of a PPDU other than the PPDU is detected during the operation of receiving the PPDU, the radio communication apparatus can update a part or an entirety of information related to a destination address, a source address, the PPDU, or a DATA period.

Ack and BA can also be referred to as a response (response frame). Also, a probe response, an authentication response, and an association response can also be referred to as a response.

1. First Embodiment

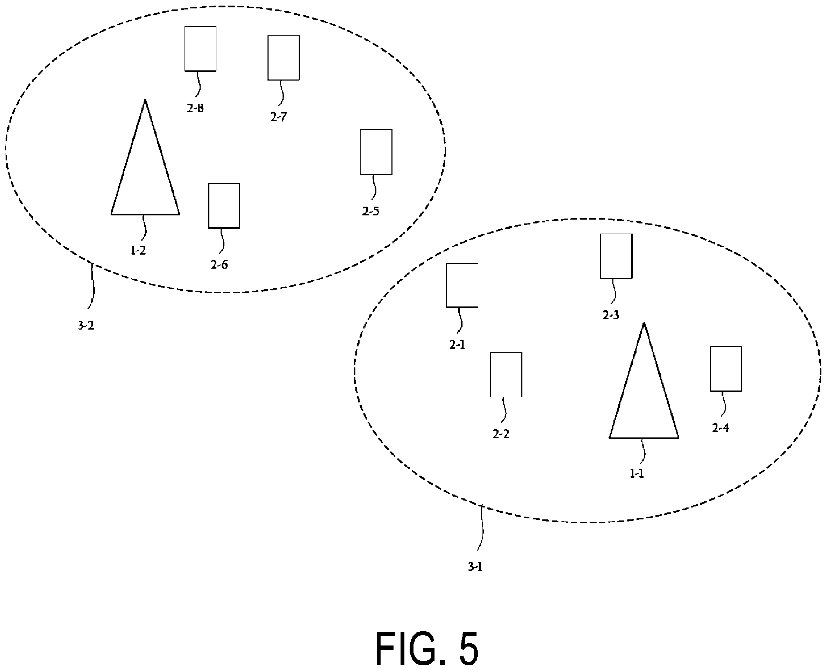

FIG. 5 is a diagram illustrating an example of a radio communication system according to the present embodiment. A radio communication system 3-1 includes a radio communication apparatus 1-1 and radio communication apparatuses 2-1 to 2-4. Note that the radio communication apparatus 1-1 will also be referred to as a base station apparatus 1-1, and the radio communication apparatuses 2-1 to 2-4 will also be referred to as terminal apparatuses 2-1 to 2-4. In addition, the radio communication apparatuses 2-1 to 2-4 and the terminal apparatuses 2-1 to 2-4 will also be referred to as a radio communication apparatus 2A and a terminal apparatus 2A, respectively, as apparatuses associated to the radio communication apparatus 1-1. The radio communication apparatus 1-1 and the radio communication apparatus 2A are wirelessly associated and are in a state in which they can transmit and/or receive PPDUs to and from each other. Also, the radio communication system according to the present embodiment includes a radio communication system 3-2 in addition to the radio communication system 3-1. The radio communication system 3-2 includes a radio communication apparatus 1-2 and radio communication apparatuses 2-5 to 2-8. Note that the radio communication apparatus 1-2 will also be referred to as a base station apparatus 1-2 and the radio communication apparatuses 2-5 to 2-8 will also be referred to as terminal apparatuses 2-5 to 2-8. Also, also, the radio communication apparatuses 2-5 to 2-8 and the terminal apparatuses 2-5 to 2-8 will also be referred to as a radio communication apparatus 2B and a terminal apparatus 2B, respectively, as apparatuses associated to the radio communication apparatus 1-2. Although the radio communication system 3-1 and the radio communication system 3-2 form different BSSs, this does not necessarily mean that Extended Service Sets (ESSs) are different. The ESSs indicate service sets each forming a Local Area Network (LAN). In other words, radio communication apparatuses belonging to the same ESS can be regarded as belonging to the same network from a higher layer. Note that each of the radio communication systems 3-1 and 3-2 can further include a plurality of radio communication apparatuses.

In FIG. 5, it is assumed that signals transmitted by the radio communication apparatus 2A reach the radio transmitting apparatus 1-1 and the radio communication apparatus 2BA while the signals do not reach the radio communication apparatus 1-2 in the following description. In other words, in a case that the radio communication apparatus 2A transmits a signal using a certain channel, the radio communication apparatus 1-1 and the radio communication apparatus 2B determine that the channel is in the busy state while the radio communication apparatus 1-2 determines that the channel is in an idle state. Also, it is assumed that signals transmitted by the radio communication apparatus 2B reach the radio transmitting apparatus 1-2 and the radio communication apparatus 2A while the signals do not reach the radio communication apparatus 1-1. In other words, in a case that the radio communication apparatus 2B transmits a signal using a certain channel, the radio communication apparatus 1-2 and the radio communication apparatus 2A determine that the channel is in the busy state while the radio communication apparatus 1-1 determines that the channel is in the idle state.

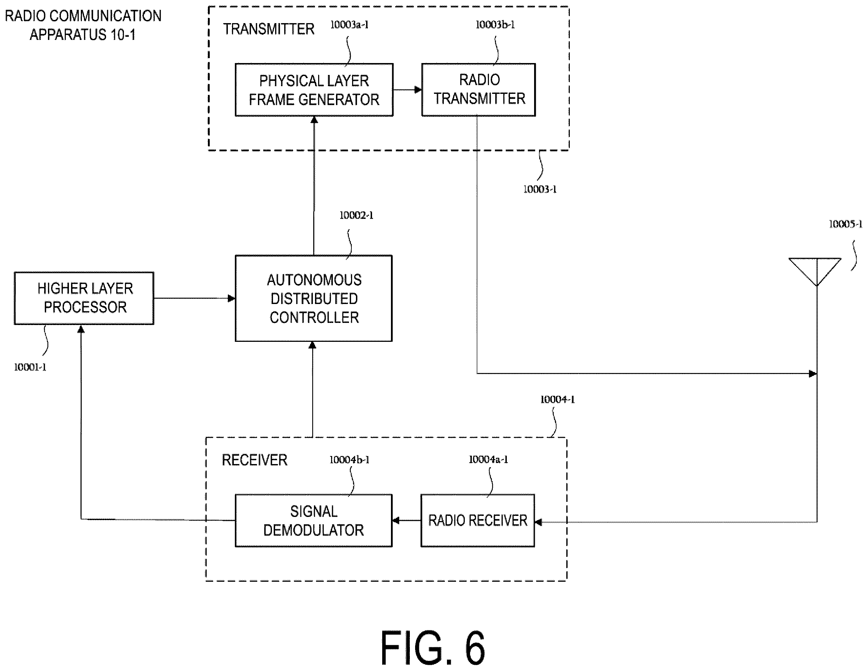

FIG. 6 is a diagram illustrating an example of an apparatus configuration of radio communication apparatuses 1-1, 1-2, 2A, and 2B (hereinafter, collectively referred to as a radio communication apparatus 10-1 or a station apparatus 10-1 or also simply referred to as a station apparatus). The radio communication apparatus 10-1 includes a higher layer processor (higher layer processing step) 10001-1, an autonomous distributed controller (autonomous distributed control step) 10002-1, a transmitter (transmission step) 10003-1, a receiver (reception step) 10004-1, and an antenna 10005-1.

The higher layer processor 10001-1 is associated with another network to be able to notify the autonomous distributed controller 10002-1 of information related to a traffic. The information related to the traffic may be, for example, information directed for another radio communication apparatus, or may be control information included in a management frame or control frame.

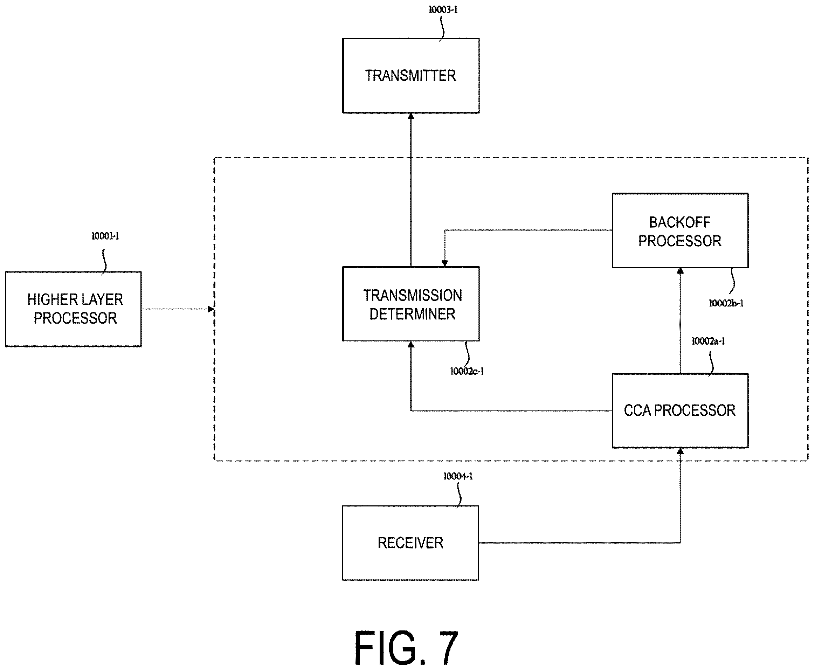

FIG. 7 is a diagram illustrating an example of an apparatus configuration of the autonomous distributed controller 10002-1. The autonomous distributed controller 10002-1 includes a CCA processor (CCA step) 10002a-1, a backoff processor (backoff step) 10002b-1, and a transmission determiner (transmission determination step) 10002c-1.

The CCA processor 10002a-1 can perform determination of a state of a radio resource (including determination between busy and idle) by using any one of or both information related to reception signal power received via the radio resource or information related to a reception signal (including information after decoding) provided as a notification from the receiver. The CCA processor 10002a-1 can notify the backoff processor 10002b-1 and the transmission determiner 10002c-1 of the state determination information of the radio resource.

The backoff processor 10002b-1 can perform backoff using the state determination information of the radio resource. The backoff processor 10002b-1 generates CW and includes a counting-down function. For example, it is possible to perform counting-down of CW in a case that the state determination information of the radio resource indicates idle, and it is possible to stop the counting-down of CW in a case that the state determination information of the radio resource indicates busy. The backoff processor 10002b-1 can notify the transmission determiner 10002c-1 of the value of CW.

The transmission determiner 10002c-1 performs transmission determination using any one of or both the state determination information of the radio resource and the value of CW. For example, it is possible to notify the transmitter 10003-1 of transmission determination information in a case that the state determination information of the radio resource indicates idle and the value of CW is zero. Also, it is possible to notify the transmitter 10003-1 of the transmission determination information in a case that the state determination information of the radio resource indicates idle.

The transmitter 10003-1 includes a physical layer frame generator (physical layer frame generation step) 10003a-1 and a radio transmitter (radio transmission step) 10003b-1. The physical layer frame generator 10003a-1 includes a function of generating a physical layer frame (PPDU), based on the transmission determination information provided as a notification from the transmission determiner 10002c-1. The physical layer frame generator 10003a-1 performs error correction coding, modulation, precoding filter multiplication, and the like on the transmission frame sent from the higher layer. The physical layer frame generator 10003a-1 notifies the radio transmitter 10003b-1 of the generated physical layer frame.

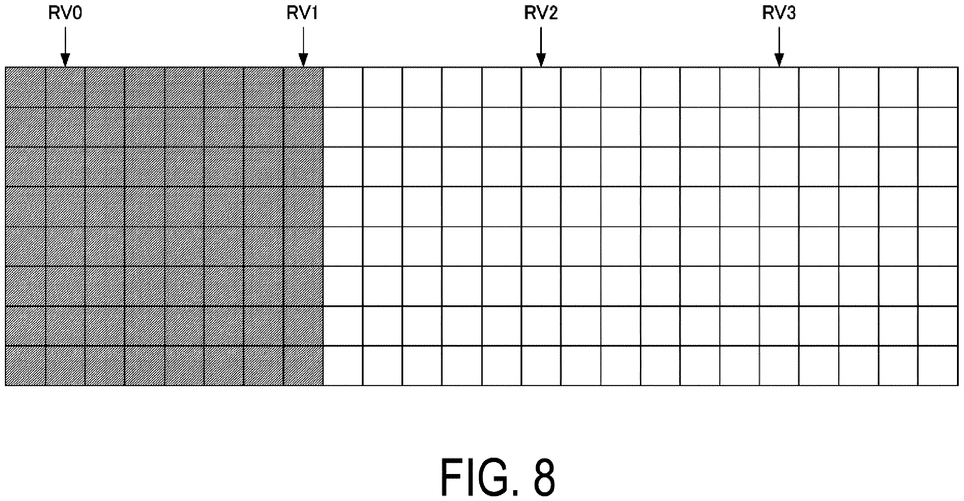

FIG. 8 is a diagram illustrating an example of error correction coding by the physical frame generator according to the present embodiment. As illustrated in FIG. 8, an information bit (systematic bit) sequence is arranged in the hatched region and a redundancy (parity) bit sequence is arranged in the white region. For each of the information bit and the redundancy bit, a bit interleaver is appropriately applied. The physical frame generator can read a necessary number of bits as a start position determined for the arranged bit sequence in accordance with a value of Redundancy Version (RV). It is possible to achieve a flexible change in coding rate, that is puncturing, through adjustment of the number of bits. Note that although a total of four RVs are illustrated in FIG. 8, the number of options for the RV is not limited to a specific value in the error correction coding according to the present embodiment. The position of the RV has to be shared among the station apparatuses.

The physical layer frame generator performs error correction coding for the information bits transferred from the MAC layer, but a unit for the error correction coding (coding block length) is not limited to anything. For example, the physical layer frame generator can split an information bit sequence transferred from the MAC layer into information bit sequences of a predetermined length, and perform error correction coding on the respective sequences to configure a plurality of coding blocks. Note that dummy bits can be inserted into the information bit sequence transferred from the MAC layer, in a case of configuring the coding blocks.

The frame generated by the physical layer frame generator 10003a-1 includes control information. The control information includes information indicating which RU (here, the RU includes both frequency resources and spatial resources) data directed for each radio communication apparatus is arranged in. Also, the frame generated by the physical layer frame generator 10003a-1 includes a trigger frame for providing an indication for transmitting the frame to the radio communication apparatus that is a destination terminal. The trigger frame includes information indicating the RU used in a case that the radio communication apparatus that has received the indication for transmitting the frame transmits the frame.

The radio transmitter 10003b-1 converts the physical layer frame generated by the physical layer frame generator 10003a-1 into a signal in a Radio Frequency (RF) band to generate a radio frequency signal. Processing performed by the radio transmitter 10003b-1 includes digital-to-analog conversion, filtering, frequency conversion from a baseband to an RF band, and the like.

The receiver 10004-1 includes a radio receiver (radio receiving step) 10004a-1 and a signal demodulator (signal demodulation step) 10004b-1. The receiver 10004-1 generates information related to reception signal power from the signal in the RF band received by the antenna 10005-1. The receiver 10004-1 can notify the CCA processor 10002a-1 of the information related to the reception signal power and the information related to the reception signal.

The radio receiver 10004a-1 includes a function of converting the signal in the RF band received by the antenna 10005-1 into a baseband signal and generating a physical layer signal (for example, a physical layer frame). Processing performed by the radio receiver 10004a-1 includes frequency conversion processing from the RF band to the baseband, filtering, and analog-to-digital conversion.

The signal demodulator 10004b-1 has a function of demodulating the physical layer signal generated by the radio receiver 10004a-1. Processing performed by the signal demodulator 10004b-1 includes channel equalization, demapping, error correction decoding, and the like. The signal demodulator 10004b-1 can extract, from the physical layer signal, information included in the physical layer header, information included in the MAC header, and information included in the transmission frame, for example. The signal demodulator 10004b-1 can notify the higher layer processor 10001-1 of the extracted information. Note that the signal demodulator 10004b-1 can extract any one or all of information included in the physical layer header, information included in the MAC header, and information included in the transmission frame.

The antenna 10005-1 includes a function of transmitting the radio frequency signal generated by the radio transmitter 10003b-1 to a radio space toward a radio apparatus 0-1. The antenna 10005-1 includes a function of receiving the radio frequency signal transmitted from the radio apparatus 0-1.

The radio communication apparatus 10-1 can cause radio communication apparatuses in the surroundings of the radio communication apparatus 10-1 to configure NAV corresponding to a period during which the radio communication apparatus 10-1 uses a radio medium by describing information indicating the period in the PHY header or the MAC header of the frame to be transmitted. For example, the radio communication apparatus 10-1 can describe the information indicating the period in a Duration/ID field or a Length field in the frame to be transmitted. The NAV period configured to the radio communication apparatuses in the surroundings of the radio communication apparatus 10-1 will be referred to as a TXOP period (or simply TXOP) acquired by the radio communication apparatus 10-1. Also, the radio communication apparatus 10-1 that has acquired the TXOP will be referred to as a TXOP holder. The frame type of frame to be transmitted by the radio communication apparatus 10-1 to acquire TXOP is not limited to any frame type, and the frame may be a control frame (for example, an RTS frame or a CTS-to-self frame) or may be a data frame.

The radio communication apparatus 10-1 that is a TXOP holder can transmit the frame to radio communication apparatuses other than the radio communication apparatus 10-1 during the TXOP. In a case that the radio communication apparatus 1-1 is a TXOP holder, the radio communication apparatus 1-1 can transmit a frame to the radio communication apparatus 2A during the TXOP period. Also, the radio communication apparatus 1-1 can provide an indication for transmitting a frame directed to the radio communication apparatus 1-1 to the radio communication apparatus 2A during the TXOP period. The radio communication apparatus 1-1 can transmit, to the radio communication apparatus 2A, a trigger frame including information for providing an indication for transmitting the frame directed to the radio communication apparatus 1-1 during the TXOP period.

The radio communication apparatus 1-1 may ensure TXOP for the entire communication band (an Operation bandwidth, for example) that may be used for frame transmission, or may ensure for a specific communication Band such as a communication band actually used to transmit the frame (a Transmission bandwidth, for example).

The radio communication apparatus to which the radio communication apparatus 1-1 provides an indication for transmitting a frame in the acquired TXOP period is not necessarily limited to radio communication apparatuses associated to the radio communication apparatus 1-1. For example, the radio communication apparatus can provide an indication for transmitting frames to radio communication apparatuses that are not associated to the former radio communication apparatus in order to cause the radio communication apparatuses in the surroundings of the former radio communication apparatus to transmit management frames such as a Reassociation frame or control frames such as an RTS/CTS frame.

In the present embodiment, the signal demodulator of the station apparatus can perform decoding processing and perform error detection on a received signal in the physical layer. Here, the decoding processing includes decoding processing on an error correction code applied to the received signal. Here, the error detection includes error detection using an error detection code that has been pre-applied to the received signal (e.g., a cyclic redundancy check (CRC) code), and error detection using an error correction code originally having an error detection function (e.g., a low density parity check code (LDPC)). The decoding processing (first decoding) in the physical layer can be applied per coding block.

The higher layer processor transfers a result of decoding the physical layer in the signal demodulator to the MAC layer. In the MAC layer, the signal for the MAC layer is restored from the transferred result of decoding the physical layer (also referred to as second decoding). Then, in the MAC layer, error detection is performed to determine whether the signal for the MAC layer transmitted by the transmission source station apparatus of the reception frame is correctly restored.

In a case of being determined that the signal is not correctly restored in the MAC layer, the station apparatus transmits a retransmission request to the transmission source station apparatus of the reception frame. By using the retransmitted signal for the MAC layer, the station apparatus can perform packet combining in the MAC layer. The packet combining in the MAC layer performed by the station apparatus according to the present embodiment is not limited to anything, and discarding the MAC layer that the error is detected and adopting the retransmitted MAC layer can also be included in the packet combining in the present embodiment. In a station apparatus of a related art, the retransmission request is generated only in the MAC layer.

The station apparatus according to the present embodiment generates a retransmission request signal to be transmitted to the transmission source station apparatus of the reception frame by using not only the information of the MAC layer but also the information associated with the error correction decoding in the PHY layer. Hereinafter, the retransmission request signal generated using only the information of the MAC layer is also referred to as a first retransmission request signal, and the retransmission request signal generated additionally using the information associated with the error correction decoding in the PHY layer is also referred to as a second retransmission request signal. The station apparatus can notify another station apparatus or an access point apparatus with which the station apparatus itself is associated of function information indicating whether to be capable of transmitting the second retransmission request signal and whether to be capable of interpreting the second retransmission request signal.

In addition, the station apparatus according to the present embodiment can notify another station apparatus or an access point apparatus with which the station apparatus itself is associated of function information indicating that reception of the second retransmission request signal is rejected.

The transmitter of the station apparatus according to the present embodiment first generates a signal for the physical layer of the retransmission request signal, based on the information transferred from the MAC layer. Then, a PHY header is added to the signal of the physical layer, where the transmitter according to the present embodiment includes, in the PHY header, information associated with an error detection result in the physical layer.

For example, the transmitter according to the present embodiment can include information indicating whether an error is detected per code block as the error detection result in the physical layer. The transmitter according to the present embodiment can include, in the PHY header, information indicating the RV per code block. Here, the transmitter according to the present embodiment can also include, in the PHY header, a value indicating a predetermined number as the information indicating the RV to notify the transmission source station apparatus that no error is detected in the coding block.

Note that in a case that the station apparatus transmits the second retransmission request signal, the signal demodulator can hold information before decoding for the code block in which the error is detected in the physical layer. The information before decoding can be a logarithmic likelihood ratio. The holding of the information before decoding can actually be only for the coding block in which the error is detected, but an information bit sequence after decoding is desirably held also for the coding block in which no error is detected.

The PHY header configured for the second retransmission request signal includes information indicating that the signal to which the PHY header is added is the second retransmission request signal.

The station apparatus receiving the second retransmission request signal also retransmits, in addition to transmitting information bits transferred from the MAC layer, the signal of the physical layer in which the error is detected on a reception side by the second retransmission request signal.

The transmitter of the station apparatus receiving the second retransmission request signal first generates a coding block for the physical layer by using the information bits transferred from the MAC layer, and generates a first physical layer signal (first physical frame). Then, the transmitter extracts the coding block for the physical layer already transmitted, based on the second retransmission request signal to generate a second physical layer signal (second physical frame). The transmitter can link the first physical layer signal with the second physical layer signal to generate a physical layer signal. A transmission PHY header added to the physical layer signal can include information indicating that the second physical layer signal is present. The transmission PHY header added to the physical layer signal can include information indicating a position of the second physical layer signal.

The second physical layer signal is generated from the already transmitted coding block, where the coding block can be replaced with a coding block indicated by a different RV. At this time, which RV the coding block to be replaced with is indicated by can be determined by the station apparatus, based on the information described in the reception PHY header of the second retransmission request signal. The station apparatus can also include, in the transmission PHY header, information indicating the RV used in the coding block for the second retransmission request signal.

The station apparatus receiving a retransmission frame including the second physical layer signal can perform packet combining in the physical layer by using the second physical layer signal included in the retransmission frame (second reception frame) and the physical layer signal in which the error correction decoding is performed in an initial transmission frame. Note that the station apparatus performs packet combining in the physical layer for the coding block, but may perform the packet combining before performing the error correction decoding processing, may perform the packet combining after performing the error correction decoding processing, or may perform simultaneously the error correction decoding processing and the packet combining.

A packet combining method in the physical layer is not limited to anything. The packet combining can be performed with the coding block of the initial transmission frame corresponding to the second physical layer signal included in the retransmission frame, and a decoding result can be transferred to the MAC layer. In this case, it is necessary to notify the MAC layer from the PHY layer of which part of the information bit sequence transferred to the MAC layer in the initial transmission packet corresponds to the information bit sequence obtained by performing the packet combining in the physical layer and the decoding.

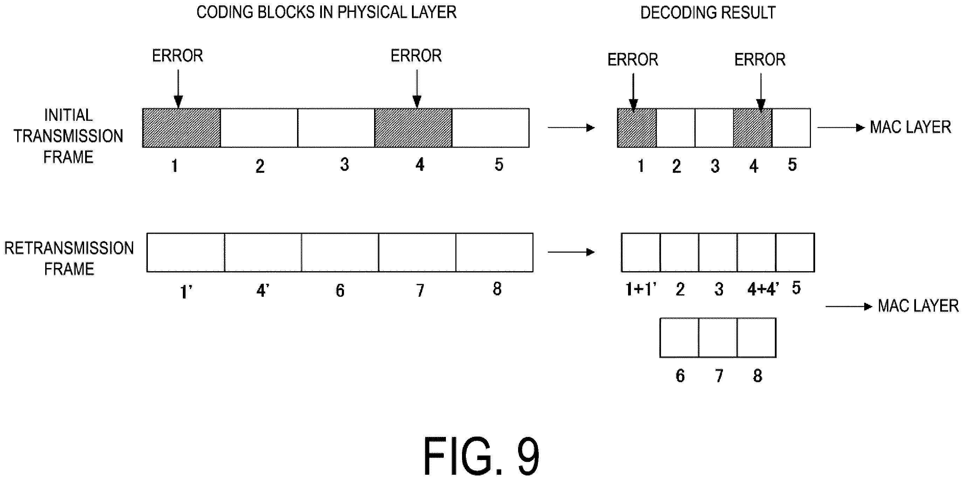

A case is also conceivable that the station apparatus holds all the information of the coding block of the initial transmission frame. FIG. 9 is an overview diagram illustrating an example of a decoding method using the second physical layer signal according to the present embodiment. Here, although a case that the frame includes five coding blocks is illustrated as the example, as a matter of course, the method of the present embodiment is not limited to this example.

It is assumed that the initial transmission frame includes five coding blocks in the physical layer. Any of these is configured by the information bit sequence transferred from the MAC layer. In this case, it is also assumed that the error is detected in the physical layer in the 1st and 4th coding blocks. In this case also, the station apparatus on the recipient transfers the decoding result of the physical layer to the MAC layer. The MAC layer reconstructs the signal of the MAC layer, that is, the MPDU, based on the transmitted decoding result, determines whether the signal has been correctly transmitted, and transfers the information bit sequence included in the first retransmission request signal in the MAC layer to the PHY layer.

Meanwhile, the station apparatus according to the present embodiment also generates, in addition to the first retransmission request signal, the second retransmission request signal requesting retransmission of the 1st and 4th coding blocks in the physical layer, and transmits the generated signal as a retransmission signal. Additionally, in FIG. 9, the station apparatus receives, from the retransmission frame, a first (and fourth) coding block(s) which is the 1st (and 4th) retransmission coding block(s) in the initial transmission frame, based on the second retransmission request signal, and three coding blocks generated based on information bits newly transferred from the MAC layer.

The station apparatus, in the case of receiving the retransmission frame, transfers the decoding result of the physical layer to the MAC layer, without taking account of packet combining for three coding blocks generated based on the information bits newly transferred from the MAC layer. On the other hand, the station apparatus performs the packet combining for the 1'st and 4'th coding blocks with the 1st and 4th coding blocks in the initial transmission frame in the physical layer to obtain a decoding result. Here, the station apparatus can transfer only the decoding result newly obtained by the packet combining to the MAC layer, or as illustrated in FIG. 9, can newly transfer the information bit sequence in which the decoding result obtained by the packet combining is replaced with the decoding result obtained in the initial transmission packet to the MAC layer.

Note that, according to the method described above, the retransmission request signal always includes the first retransmission request signal and the second retransmission request signal, but in accordance with the method according to the present embodiment, the station apparatus can also transmit the retransmission request signal only including the second retransmission request signal.

According to the station apparatus and the communication method described above, it is possible to perform the packet combining in the PHY layer while maintaining the retransmission function of the MAC layer, so the communication quality can be improved.


2. Second Embodiment


A station apparatus according to the present embodiment can include, in a transmission frame, information (first information) indicating whether a reception method for changing a carrier sense level is allowed for a station apparatus that has received a frame. Hereinafter, the reception method for changing a carrier sense level is also described as an SRP reception method. The transmitter of the station apparatus can include, in the transmission frame, information indicating that the SRP reception method is allowed, information indicating that the SRP reception method is prohibited, information to be referred to in performing the SRP reception method, and the like.

The reception method for changing a carrier sense level according to the present embodiment is not limited to anything. For example, the station apparatus can change the carrier sense level based on a transmission power applied to the frame in which transmission is intended. Here, the transmission power can be a maximum transmission power.

For example, the station apparatus in a case of performing frame transmission by a transmission power associated with a permitted maximum transmission power described in a reception frame can perform the frame transmission regardless of the result of the carrier sense, and the method is also included in the reception method for changing a carrier sense level. However, in a case that a frame received by the station apparatus is recognized as a frame transmitted from a station apparatus belonging to the BSS the same as the BSS to which the station apparatus itself belongs, the station apparatus itself can be allowed not to configure the reception method for changing the carrier sense level.

The transmitter of the station apparatus according to the present embodiment can transmit a frame including the second physical layer signal as illustrated in the first embodiment. The transmitter can also interpret the second retransmission request signal. Hereinafter, a coding scheme capable of generating a signal including the second physical layer signal is also referred to as a second coding scheme. Meanwhile, a coding scheme capable of generating a frame only with the first physical layer signal is also referred to as a first coding scheme.

Specifically, the first coding scheme is a scheme that takes account only of packet combining in the MAC layer, and the second coding scheme is a scheme also capable of packet combining in the PHY layer.

The transmitter of the station apparatus according to the present embodiment can select the coding scheme applied to a frame to be transmitted, from either the first coding scheme or the second coding scheme, based on whether the information indicating that the SRP reception method is allowed is included in the frame.

The transmitter of the station apparatus, in a case of including the information indicating that the SRP reception method is allowed in the frame to be transmitted, can configure the second coding scheme for the frame. In a case that the frame including the information indicating that the SRP reception method is allowed is transmitted, for example, other station apparatuses can mitigate the carrier sense level (i.e., can increase the carrier sense level), and so, a case that an error occurs in the frame is likely to be caused by a frame transmitted by a station apparatus belonging to a BSS different from the BSS to which the relevant station apparatus belongs, and it is assumed that the reception environment does not change greatly. In such an environment, large gain is likely to be obtained by HARQ for performing packet combining in the physical layer. Thus, it is possible to configure the second coding scheme.

On the other hand, the transmitter of the station apparatus, in a case of including the information indicating that the SRP reception method is prohibited in the frame to be transmitted, can configure the first coding scheme for the frame. In a case that the SRP reception method is prohibited, a case that an error occurs in the frame is likely to be caused by a frame transmitted by a station apparatus that belongs to the same BSS as the BSS to which the relevant station apparatus belongs. However, such a situation is thought to be a case that the random back-off is matched between the station apparatuses, and this situation is less likely to occur continuously. Therefore, the packet combining may not necessarily be performed in the physical layer, and it is likely that a signal can be correctly acquired if the retransmission packet can be received in the MAC layer. Thus, it is possible to configure the first coding scheme.

The transmitter of the station apparatus can differentiate a combination of configurable coding rates between the first coding scheme and the second coding scheme. For example, the number of candidates for the coding rates allowed for the first coding scheme can be greater than the number of candidates for the coding rates allowed for the second coding scheme.

The transmitter of the station apparatus can include, in the PHY header, information indicating any one of the first coding scheme or the second coding scheme. With such a configuration, the station apparatus receiving the frame including the PHY header can recognize which of the first coding scheme and the second coding scheme is configured for the received frame.

The station apparatus according to the present embodiment, in a case of transmitting a frame in the TXOP acquired by another station apparatus, can configure the second coding scheme for the transmission frame in a case that the information indicating that the SRP reception method is allowed is included in the frame that the TXOP is acquired.

The station apparatus according to the present embodiment, in the case of transmitting a frame in the TXOP acquired by another station apparatus, can configure the first coding scheme for the transmission frame in a case that the information indicating that the SRP reception method is prohibited is included in the frame that the TXOP is acquired.

The station apparatus receiving the frame can recognize which of the first coding scheme and the second coding scheme is the coding scheme configured for the frame, by reading the information described in the PHY header of the frame.

Note that the information indicating that the SRP reception method is allowed and the information indicating that the SRP reception method is prohibited may be dynamically notified by using the PHY header, as described above, or may be statically or semi-statically notified by exchanging functional information at the time of connecting to the BSS, broadcasting by a beacon frame, or the like. For example, in the case that the information allowing the SRP reception method is notified in the exchange of the functional information at the time of connecting to the BSS, the SRP reception method is allowed while a connection to the BSS is established. In this case, the station apparatus can configure the second coding scheme for the transmission frame while a connection to the BSS is established. In the case that the SRP reception method is prohibited, the first coding scheme can be configured for the transmission frame.

Similarly, in the case that the information allowing the SRP reception method is notified by broadcasting by the beacon frame, the SRP reception method is allowed in the BSS managed by an access point apparatus that transmits the beacon frame until the next beacon frame is broadcast, and so, the station apparatus connected to the BSS can configure the second coding scheme in the transmission frame.

According to the method described above, the station apparatus can selectively use the first coding scheme and the second coding scheme depending on an interference situation that can occur with respect to the transmitted frames, and thus, the packet combining gain in the physical layer can be efficiently obtained, and the communication quality can be improved.

3. Third Embodiment

A signal demodulator of a station apparatus according to the present embodiment can interpret each of the first coding scheme and the second coding scheme.

A transmitter of the station apparatus according to the present embodiment can transmit the first retransmission request signal associated with the first coding scheme. The first retransmission request signal is a retransmission request signal on the assumption of the packet combining in the MAC layer, as described above, and is, for example, a signal that is expected not to include a signal taking account of packet combining in the physical layer in the retransmission signal.

The transmitter of the station apparatus according to the present embodiment can transmit the second retransmission request signal associated with the second coding scheme. The second retransmission request signal is a retransmission request signal on the assumption of the packet combining in the physical layer, as described above, and is, for example, a signal that is expected to include a signal taking account of the packet combining in the physical layer in the retransmission signal.

In the station apparatus according to the present embodiment, based on the information indicating whether the SRP reception method is allowed included in a frame received by a receiver, the transmitter can select any one of the first retransmission request signal or the second retransmission request signal and transmit the selected retransmission request signal with being included in the frame.

In the station apparatus according to the present embodiment, in a case that the received frame includes the information indicating that the SRP reception method is allowed for the frame in transmitting the retransmission request signal for the received frame, the transmitter transmits a frame including the second retransmission request signal.

On the other hand, in a case that the received frame includes the information indicating that the SRP reception method is prohibited for the frame in transmitting the retransmission request signal for the received frame, the transmitter transmits a frame including the first retransmission request signal.

In the station apparatus according to the present embodiment, in a case of transmitting a frame in a TXOP acquired by another station apparatus, the transmitter transmits a frame including the second retransmission request signal in a case that the information indicating that the SRP reception method is allowed is included in the frame that the TXOP is acquired.

Additionally, in the station apparatus according to the present embodiment, in the case of transmitting a frame in the TXOP acquired by another station apparatus, the transmitter transmits a frame including the first retransmission request signal in a case that the information indicating that the SRP reception method is prohibited is included in the frame that the TXOP is acquired.

The station apparatus according to the present embodiment can include, in the PHY header of a frame to be transmitted, whether the retransmission request signal included in the frame is the first retransmission request signal or the second retransmission request signal. With such a configuration, the station apparatus receiving the frame can recognize whether the received retransmission request signal is the first retransmission request signal or the second retransmission request signal.

According to the method described above, the station apparatus can selectively use the first coding scheme and the second coding scheme depending on an interference situation that can occur with respect to the received frames, and thus, the packet combining gain in the physical layer can be efficiently obtained, and the communication quality can be improved.

4. Fourth Embodiment

The station apparatus according to the present embodiment can transmit a trigger frame that causes frame transmission in another station apparatus.

The station apparatus that receives the trigger frame can perform frame transmission, based on information described in the trigger frame.

A station apparatus according to the present embodiment can include, in the trigger frame, the information indicating any one of the first coding scheme or the second coding scheme. The station apparatus transmitting a frame based on the trigger frame can configure any one of the first coding scheme or the second coding scheme for the frame to be transmitted based on the information described in the trigger frame.

The station apparatus according to the present embodiment can select the coding scheme configured for the transmission frame, based on another piece of information described in the trigger frame. For example, a frequency band allocated to the transmission frame, that is, information of a resource unit is described in the trigger frame. In a case that the number of resource units allocated to the station apparatus having received the trigger frame (i.e., an allocated frequency bandwidth) is larger than a predetermined number, the station apparatus can configure the second coding scheme for the transmission frame. In a case that the number of resource units allocated to the station apparatus (i.e., the allocated frequency bandwidth) is smaller than the predetermined number, the station apparatus can configure the first coding scheme for the transmission frame. However, this is on the assumption of a case that the amount of information required for a retransmission request signal or a retransmission signal is large in a case where the second coding scheme is configured, and so, depending on the method of the second coding scheme, in the case that the number of resource units allocated to the station apparatus (i.e., the allocated frequency bandwidth) is smaller than the predetermined number, the station apparatus can also configure the second coding scheme for the transmission frame.

In a case that the length of the TXOP reserved by the trigger frame is shorter than a predetermined value, the first coding scheme can be configured for a transmission frame caused by the trigger frame. In a case that the length of the TXOP reserved by the trigger frame is longer than the predetermined value, the second coding scheme can be configured for the transmission frame caused by the trigger frame. This is because in a case that the frame retransmission is expected at the same TXOP, the interference situations of an initial transmission frame and a retransmission frame are likely to be the same, and thus, the combining gain due to the second coding scheme, that is, the packet combining in the physical layer can be expected. On the other hand, in a case that the length of the TXOP reserved by the trigger frame is shorter than the predetermined value, the initial transmission frame and the retransmission frame are likely to be transmitted at different TXOPs. This is because in the case like this, the frames are likely to be received in different interference situations, and thus, a sufficient packet combining gain is considered to be obtained in the first coding scheme.

The station apparatus can also change the coding scheme to be configured in accordance with the radio parameter configured for the transmission frame caused by the trigger frame. For example, in a case that the coding rates or modulation schemes configured for the transmission frame is a predetermined combination, the second coding scheme can be configured for the transmission frame.

The station apparatus can change the coding scheme configured for the transmission frame in accordance with the maximum value configurable for frame aggregation in the MAC layer, that is, a maximum number of aggregatable MPDUs.

The station apparatus can describe the maximum number of frame aggregations configurable by the second coding scheme for the frame to be transmitted.

Note that in a case that a plurality of RUs are allocated to the station apparatus, or in a case that the frame transmission is performed using a plurality of RUs to the station apparatus, the station apparatus can notify information associated with the second coding scheme per RU. The station apparatus can select the first coding scheme and the second coding scheme per RU.

In a case that the station apparatus describes the information associated with the second coding scheme in the PHY header, the description may be per RU.

The station apparatus, in a case of being allocated with a plurality of RUs or using a plurality of RUs, can generate coding blocks per RU. This means that all of the coding blocks generated by the station apparatus are transmitted in one RU.

The station apparatus can transmit the generated coding blocks by using at least two RUs. In other words, the station apparatus can generate coding blocks across a plurality of RUs.

The station apparatus can select whether to generate coding blocks per RU or across a plurality of RUs in accordance with a case that the first coding scheme is used and a case that the second coding scheme is used.

For example, the station apparatus, in the case of using the second coding scheme, generates the coding blocks per RU to thereby be able to retransmit only the coding block associated with the RU in which an error has occurred, so that the radio resources can be efficiently used. For example, the station apparatus, in the case of using the first coding scheme, can generate coding blocks across the plurality of RUs.

The station apparatus, in the case of using the plurality of RUs, can select whether to generate coding blocks across a plurality of RUs or per RU in accordance with the frequency bandwidth of each RU. For example, the station apparatus can generate coding blocks per RU in a case that the number of the subcarriers (tones) included in the RU to be used exceeds 100. The station apparatus can generate coding blocks across the plurality of RUs in a case that the number of the subcarriers included in the RU to be used falls below 100.

According to the method described above, the station apparatus can appropriately configure the coding scheme for the transmission frame caused by the trigger frame, and thus, the communication quality can be improved.

5. Matters Common to All Embodiments

A program that operates in the radio communication apparatus according to an aspect of the present invention is a program (a program for causing a computer to function) for controlling a CPU or the like to implement the functions of the aforementioned embodiments related to an aspect of the present invention. The information handled by these apparatuses is temporarily held in a RAM at the time of processing, is then stored in various types of ROMs and HDDs, and is read by the CPU as necessary to be corrected and written. Here, a semiconductor medium (a ROM, a non-volatile memory card, or the like, for example), an optical recording medium (a DVD, an MO, an MD, a CD, a BD, or the like, for example), a magnetic recording medium (a magnetic tape, a flexible disk, or the like, for example), and the like can be given as examples of recording media for storing the programs. In addition to implementing the functions of the aforementioned embodiments by performing loaded programs, the functions of the present invention are implemented by the programs running cooperatively with an operating system, other application programs, or the like in accordance with indications included in those programs.

In a case of delivering these programs to market, the programs can be stored and distributed in a portable recording medium, or transferred to a server computer connected via a network such as the Internet. In this case, storage devices in the server computer are also included in an aspect of the present invention. Also, a part or an entirety of the radio communication apparatus 1-1, the radio communication apparatus 2-1, the radio communication apparatus 1-2, and the radio communication apparatus 2-2 in the aforementioned embodiments may be implemented as an LSI that is typically an integrated circuit. The functional blocks of the radio communication apparatus 1-1, the radio communication apparatus 2-1, the radio communication apparatus 1-2, and the radio communication apparatus 2-2 may be individually implemented as chips or may be partially or entirely integrated into a chip. In a case that the functional blocks are circuit-integrated, an integrated circuit controller for controlling them is added.

The circuit integration technique is not limited to LSI, and the integrated circuits for the functional blocks may be realized as dedicated circuits or a multi-purpose processor. Moreover, in a case that with advances in semiconductor technology, a circuit integration technology with which an LSI is replaced appears, it is also possible to use an integrated circuit based on the technology.

Note that the invention of the present application is not limited to the above-described embodiments. The radio communication apparatus according to the invention of the present application is not limited to the application in the mobile station apparatus, and, needless to say, can be applied to a fixed-type electronic apparatus installed indoors or outdoors, or a stationarytype electronic apparatus, for example, an AV apparatus, a kitchen apparatus, a cleaning or washing machine, an air-conditioning apparatus, office equipment, a vending machine, and other household apparatuses.

The embodiments of the invention have been described in detail thus far with reference to the drawings, but the specific configuration is not limited to the embodiments. Other designs and the like that do not depart from the essential spirit of the invention also fall within the scope of the aspects.

Industrial Applicability

An aspect of the present invention can be preferably used in a station apparatus and a communication method.

Reference Signs List

1-1, 1-2, 2-1 to 2-8, 2A, 2B Radio communication apparatus
3-1, 3-2 Management range
10001-1 Higher layer processor
10002-1 Autonomous distributed controller
10002a-1 CCA processor
10002b-1 Backoff processor
10002c-1 Transmission determiner
10003-1 Transmitter
10003a-1 Physical layer frame generator
10003b-1 Radio transmitter
10004-1 Receiver
10004a-1 Radio receiver
10004b-1 Signal demodulator
10005-1 Antenna

**Claims**

1. A station apparatus configured to interpret a physical layer signal, the station apparatus comprising:

   a signal demodulator configured to decode the physical layer signal and perform error detection, based on either first decoding that performs packet combining in the physical layer or second decoding that does not perform packet combining in the physical layer;
   a higher layer processor configured to transfer a result of the error detection to a MAC layer; and
   a transmitter configured to hold at least part of the physical layer signal and transmit a trigger frame that causes another station apparatus to transmit a frame, wherein
   the trigger frame includes information indicating either the first decoding or the second decoding.

2. The station apparatus according to claim 1, wherein

   the trigger frame includes information indicating a resource unit allocated to the other station apparatus, and
   in a case that the information indicating the resource unit indicates a bandwidth smaller than a prescribed value, the trigger frame includes the information indicating the second decoding.

3. The station apparatus according to claim 1, wherein
   in a case that a maximum number of frame aggregations performed by the other station apparatus is larger than a prescribed value, the trigger frame includes the information indicating the second decoding.

4. The station apparatus according to claim 1, wherein

   a maximum number of frame aggregations performed by the other station apparatus is described in the trigger frame, and
   in a case that the maximum number of frame aggregations is larger than a prescribed value, the trigger frame includes the information indicating the second decoding.

5. The station apparatus according to claim 1, wherein
   in a case that a period during which the trigger frame reserves a radio medium is shorter than a prescribed period, the trigger frame includes the information indicating the second decoding.

6. A communication method for a station apparatus configured to interpret a physical layer signal, the communication method comprising the steps of:

   decoding a physical layer signal and performing error detection, based on either first decoding that performs packet combining in the physical layer or second decoding that does not perform the packet combining in the physical layer;
   transferring a result of the error detection to a MAC layer;
   holding at least part of the physical layer signal; and
   transmitting a trigger frame that causes another station apparatus to transmit a frame, wherein
   the trigger frame includes information indicating either the first decoding or the second decoding.

IEEE 802.11a/b/g

IEEE 802.11n

IEEE 802.11ac

IEEE 802.11ax

IEEE 802.11be

FIG. 1

EP 4 109 992 A1

| L-STF | L-LTF | L-SIG | VHT-SIG-A | VHT-STF | VHT-LTF | VHT-SIG-B | MAC Frame |
|-------|-------|-------|-----------|---------|---------|-----------|-----------|

TXTIME

aPreambleLength

aPLCPHeaderLength

L_LENGTH/L_RATE

L_RATE
L_LENGTH

# FIG. 2

FIG. 3

EP 4 109 992 A1

RESOURCE SPLITTING EXAMPLE 1

RESOURCE SPLITTING EXAMPLE 2

RESOURCE SPLITTING EXAMPLE 3

RESOURCE SPLITTING EXAMPLE 4

MINIMUM SUBCARRIER INDEX

DC SUBCARRIER

MAXIMUM SUBCARRIER INDEX

SUBCARRIER INDEX

FIG. 4

FIG. 5

FIG. 6

FIG. 7

EP 4 109 992 A1

RV0          RV1              RV2              RV3

FIG. 8

FIG. 9

## INTERNATIONAL SEARCH REPORT

| | International application No. |
|---|---|
| | PCT/JP2021/005878 |

A. CLASSIFICATION OF SUBJECT MATTER
H04W 72/04(2009.01)i; H04W 28/04(2009.01)i; H04W 84/12(2009.01)i
FI: H04W28/04 110; H04W72/04 132; H04W84/12

According to International Patent Classification (IPC) or to both national classification and IPC

B. FIELDS SEARCHED

Minimum documentation searched (classification system followed by classification symbols)
H04W4/00-99/00, H04B7/24-7/26

Documentation searched other than minimum documentation to the extent that such documents are included in the fields searched
Published examined utility model applications of Japan          1922-1996
Published unexamined utility model applications of Japan        1971-2021
Registered utility model specifications of Japan                1996-2021
Published registered utility model applications of Japan        1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-22074 A (SONY ERICSSON MOBILECOMMUNICATIONS JAPAN INC.) 28 January 2010 (2010-01-28) paragraphs [0065], [0068] | 1-6 |
| A | JP 2020-005266 A (TOSHIBA CORP.) 09 January 2020 (2020-01-09) paragraphs [0021]-[0028], [0032], [0042], [0062] | 1-6 |

☐ Further documents are listed in the continuation of Box C.       ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 12 May 2021 (12.05.2021) | 25 May 2021 (25.05.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

International application No.

PCT/JP2021/005878

| Patent Documents referred in the Report | Publication Date | Patent Family | Publication Date |
|---|---|---|---|
| JP 2010-22074 A | 28 Jan. 2010 | US 2005/0111391 A1 paragraphs [0084], [0087] EP 1531557 A2 KR 10-2005-0045912 A CN 1619973 A | |
| JP 2020-005266 A | 09 Jan. 2020 | US 2018/0062713 A1 paragraphs [0045]- [0052], [0056], [0066], [0086] | |

**REFERENCES CITED IN THE DESCRIPTION**

**Patent documents cited in the description**

• JP 2020025104 A